# EUROPÄISCHE PATENTSCHRIFT

(11) **EP 2 422 432 B1**
(45) Veröffentlichungstag und Bekanntmachung des Hinweises auf die Patenterteilung: **23.01.2013**
(21) Anmeldenummer: 10711353.2
(22) Anmeldetag: 30.03.2010
(51) Int. Cl.: H02K 15/00, B22D 19/00, H02K 17/16

(54) **KURZSCHLUSSLÄUFER MIT GEGOSSENEN KURZSCHLUSSSTÄBEN**
SHORT-CIRCUIT ROTOR HAVING CAST SHORT-CIRCUIT BARS
ROTOR EN COURT-CIRCUIT À TIGES DE COURT-CIRCUIT COULÉES

(30) Priorität: 25.04.2009 DE 102009018951
(43) Veröffentlichungstag der Anmeldung: 29.02.2012
(73) Patentinhaber: KSB Aktiengesellschaft, 67227 Frankenthal (DE)
(72) Erfinder: HARTMANN, Harald, 83259 Schleching (DE); KÖHLER, Bernd, 66969 Lemberg (DE); WAGNER, Ralf, 10625 Berlin (DE)
(86) Internationale Anmeldenummer: PCT/EP2010/001995
(87) Internationale Veröffentlichungsnummer: WO 2010/121697

(56) Entgegenhaltungen:
- JP-A- 59 070 170
- JP-A- 2007 315 377
- US-A- 2 528 154
- US-A- 3 705 971
- US-A- 5 952 764
- US-A1- 2004 113 508

## Beschreibung

Die Erfindung betrifft einen Kurzschlussläufer für Asynchronmaschinen und ein Verfahren zu dessen Herstellung. Der Kurzschlussläufer umfasst ein Rotorpaket, Kurzschlussringe und Kurzschlussstäbe, wobei das Rotorpaket mit den Kurzschlussringen paketiert wird und das Rotorpaket mit Hohlräumen versehen ist.

Drehstrom-Asynchronmaschinen, die auch als Drehstrom-Induktionsmaschinen bezeichnet werden, können entweder als Generator oder als Motor eingesetzt werden. Asynchronmaschinen besitzen einen passiven Läufer, auch Rotor genannt, der entweder ständig oder fallweise kurzgeschlossen wird. Wird der Läufer ständig kurzgeschlossen so bezeichnet man ihn auch als Kurzschlussläufer. Der Kurzschlusskäfig einer Asynchronmaschine besteht aus elektrisch leitenden Kurzschlussstäben und Kurzschlussringen. Die Kurzschlussstäbe durchziehen das Rotorblechpaket und sind an den Enden durch die Kurzschlussringe elektrisch leitend verbunden.

Bei kleineren Maschinen kommen in der Regel Aluminium-Kurzschlusskäfige zum Einsatz. Dabei wird der komplette Kurzschlusskäfig aus Aluminiumguss hergestellt. Dazu wird die flüssige Schmelze unter hohem Druck und mit einer hohen Geschwindigkeit in eine Druckgussform, die ein auf einem Dorn befindliches Rotorpaket umgibt, gedrückt, wo sie dann erkaltet.

Größere Kurzschlusskäfige können nicht komplett gegossen werden, da die Käfiggröße durch das maximale Volumen der Einspritzvorrichtung begrenzt ist. Bei leistungsstarken Asynchronmaschinen werden daher vorgefertigte Stäbe eingesetzt. Diese vorgefertigten Stäbe bestehen in der Regel aus Kupfer. Die Kupferstäbe werden in das magnetische Eisenblechpaket des Rotors eingebracht. Anschließend werden die Kupferstäbe in beiderseits außen liegende Kurzschlussringe aus dem gleichen Material eingelötet oder eingeschweißt.

In der DE 38 34 466 C1 wird ein Kurzschlussläufer für eine elektrische Maschine beschrieben. Bei dem Kurzschlussläufer ragen die Enden der Läuferstäbe in stirnseitige Vertiefungen des Kurzschlussringes. Durch Hartlot werden die Läuferstäbe elektrisch und mechanisch mit dem Kurzschlussring verbunden.

Verfahren, bei denen die Einzelteile des Käfigs durch Hartlöten oder Verschweißen verbunden werden, sind sehr zeit- und kostenintensiv. Daher gibt es zahlreiche Entwicklungen, bei denen die Kurzschlussringe an die Kupferstäbe angespritzt oder angegossen werden. Die Kurzschlussstäbe werden dazu vorher in das Rotorpaket eingezogen. Bei diesen Verfahren entfällt der Aufwand durch das Verlöten oder Verschweißen der Kurzschlussstäbe an die Kurzschlussringe.

Die DE 43 08 683 A1 beschreibt einen Käfigläufer für eine Asynchronmaschine. In den Nuten des Läuferblechpaketes sind Kurzschlussstäbe angeordnet. Die Kurzschlussringe werden im Aluminium-Druckguss-Verfahren hergestellt. An ihren Enden sind die Kurzschlussstäbe mit den angegossenen Kurzschlussringen verbunden.

Bei Verfahren mit angegossenen Kurzschlussringen haben die Kurzschlussstäbe ein großes radiales Spiel, um beim Einziehvorgang der Stäbe Paketierfehler der Rotorbleche auszugleichen und nicht zu verklemmen. Diese großen Toleranzen führen jedoch zu einem rotordynamisch undefinierbaren Verhalten beim Wuchten, bzw. während des Betriebs. Eine Direkteinschaltung eines mit einem solchen Läufer ausgestatteten Motors oder Generators führt zu einer Schwingungsanregung der Rotorstäbe.

Die JP 59 070170 A offenbart einen gattungsgemäßen Rotor für einen Kurzschlussläufer-Asynchronmotor und ein gattungsgemäßes Verfahren zur Herstellung eines solchen Rotors.

Die US 3 705 971 A zeigt ein Verfahren zur Herstellung eines Kurzschlussläufers eines Asynchronmotors mit Leiterstäben aus einer Kupfer-Silberlegierung.

Die US 5 952 764 A offenbart einen Käfigläufer, dessen Endringe ein speziell gestaltetes Verstärkungsteil aufweisen, das die Endringe bei hohen Geschwindigkeiten vor Deformationen schützen soll.

Die US 2 528 154 A zeigt ein weiteres Herstellungsverfahren für einen Kurzschlussläuferrotor.

Aufgabe der vorliegenden Erfindung ist es, einen Kurzschlussläufer zur Verfügung zu stellen, der mit geringem Aufwand kostengünstig hergestellt werden kann. Ein Verlöten oder Verschweißen der Kurzschlussstäbe mit den Kurzschlussringen soll vermieden werden. Gleichzeitig sollen die Kurzschlussstäbe im Rotorpaket ein möglichst geringes radiales Spiel haben, so dass kein rotordynamisch undefinierbares Verhalten auftritt.

Diese Aufgabe wird erfindungsgemäß dadurch gelöst, dass die Kurzschlussringe Öffnungen aufweisen, die mit den Hohlräumen des Rotorpakets Kanäle bilden, wobei eine Druckgussvorrichtung auf das eine Rotorende platziert wird und die Kanäle durch einen Durchlass in der Druckgussvorrichtung mit Schmelze gefüllt werden, wobei die mit erstarrter Schmelze gefüllten Kanäle die Kurzschlussstäbe des Kurzschlussläufers bilden, wobei die Kurzschlussringe aus einem Werkstoff bestehen, der eine niedrigere Schmelztemperatur aufweist als die Schmelze, die in die Kanäle gepresst wird. Erfindungsgemäß wird das Rotorpaket zusammen mit den Kurzschlussringen, ohne Kurzschlussstäbe, fertig paketiert. Das Rotorpaket ist mit Hohlräumen versehen. Bei den Hohlräumen kann es sich entweder um Nuten oder Löcher handeln. Die Kurzschlussringe weisen Öffnungen auf, die mit den Hohlräumen des Rotorpakets die zu füllenden Kanäle bilden. Es besteht ein freier Durchgang durch Rotorpaket und Kurzschlussringe. Eine Druckgussvorrichtung wird dann auf das komplettierte Rotorende über einen freien Durchgang platziert. Das gegenüberliegende Durchgangsende wird vorzugsweise mit einem Gegenhalter verschlossen. Die Druckgussvorrichtung füllt anschließend einen einzelnen oder mehrere Kanäle. Nacheinander werden auf diese Weise die Kurzschlussstäbe hergestellt, bis die in den Kurzschlussringen und dem Rotorpaket erstarrten Stäbe den Käfig komplettieren.

Das Verfahren eignet sich insbesondere zur Herstellung von Kurzschlussläufern, die in leistungsstarken Motoren zum Einsatz kommen. Vorzugsweise wird das Verfahren zur Herstellung von Kurzschlussläufern mit Kupfer-Kurzschlusskäfigen eingesetzt. Da die Schmelze die Kanäle vollständig ausfüllt, weisen dadurch hergestellte Stäbe kein radiales Spiel auf, so dass ein rotordynamisch undefinierbares Verhalten vermieden wird. Das Verfahren kann für unterschiedliche Rotorstabformen eingesetzt werden, beispielsweise Tropfenstab, Rundstab, Hochstab oder Doppelstab.

Als besonders günstig erweist es sich, dass die Kurzschlussringe aus einem Werkstoff bestehen, der eine niedrigere Schmelztemperatur aufweist als die Schmelze, die in die Kanäle gepresst wird. Dadurch können die so hergestellten Rotorstäbe mit dem Kupferring verschmelzen. Vorzugsweise werden bei dem erfindungsgemäßen Verfahren Kurzschlussringe aus einer Kupfer-Silber-Legierung eingesetzt. Die erstarrten Stäbe sorgen für den Zusammenhalt des Kurzschlussläufers.

Bei dem erfindungsgemäßen Verfahren hat es sich als vorteilhaft erwiesen, wenn die Öffnungen der Kurzschlussringe zu der dem Rotorpaket abgewandten Seite erweitert, vorzugsweise konisch erweitert, ausgeführt sind. Dadurch bildet die in dem Kurzschlussring erstarrte Schmelze einen keilförmigen Pfropf, der einem Lösen der Verbindung zwischen Stab und Ring entgegenwirkt.

Der Gegenhalter der Druckgussvorrichtung weist bei einer bevorzugten Ausführungsform der Erfindung eine Kavität auf. Die Kavität schließt sich an die Öffnung des Kurzschlussrings an. In der Kavität wird Zunder aufgenommen. Bei dem Zunder handelt es sich um dünne Oxidschichten, beispielsweise Kupferoxid, die sich durch erhöhte Temperatur in Verbindung mit einer oxidierenden Atmosphäre auf der Oberfläche der Schmelze bilden.

Bei einer weiteren Variante der Erfindung sind die Öffnungen der Kurzschlussringe und/oder die Hohlräume des Rotorpakets radial offen. In diesem Fall wird das Rotorpaket oder der Rotor von einem verschließenden Begrenzungselement umgeben. Damit die Schmelze zuverlässig in den Kanälen eingeschlossen bleibt, verfügt das Begrenzungselement über eine Spannvorrichtung, mit der eine Begrenzungselementinnenwand an das Rotorpaket gedrückt wird. Dadurch wird verhindert, dass Guss oder Schmelze aus den ganz oder teilweise offenen Hohlräumen austreten kann. Bei dem Begrenzungselement kann es sich um ein geschlitztes Rohr handeln.

Als besonders günstig erweist es sich bei der Anwendung des Verfahrens, wenn der zu füllende Kanal vor dem Gießprozess evakuiert wird. Zusätzlich kann das Rotorpaket vor dem Gießprozess erwärmt werden.

Für größere herzustellende Rotoren können auch Druckgussvorrichtungen auf beiden Seiten vorgesehen werden. Dazu muss der zu füllende Kanal vor dem Gießprozess evakuiert werden oder es muss eine Entlüftungseinrichtung für den Kanal vorgesehen werden.

Das erfindungsgemäße Verfahren kann auch zur Herstellung von Mehrfachkäfigen, vorzugsweise Doppelkäfigen, eingesetzt werden.

Weitere Merkmale und Vorteile der Erfindung ergeben sich anhand der Beschreibung von Ausführungsbeispielen, anhand von Zeichnungen und aus den Zeichnungen selbst.

Eine Vorrichtung zur Herstellung eines Kurzschlussläufers mit geschlossenen Kanälen, ist in
- Fig. 1a: als Vorderansicht, in
- Fig. 1b: als Längsschnitt entlang A-A, in
- Fig. 1c: als Vergrößerung des Ausschnitts B, in
- Fig. 1d: als Querschnitt entlang C-C, in
- Fig. 1e: als Vergrößerung des Ausschnitts D gezeigt.

Eine Vorrichtung zur Herstellung eines Kurzschlussläufers mit radial offenen Kanälen, ist in
- Fig. 2a: als Vorderansicht, in
- Fig. 2b: als Längsschnitt entlang A-A, in
- Fig. 2c: als Vergrößerung des Ausschnitts B, in
- Fig. 2d: als Querschnitt entlang C-C, in
- Fig. 2e: als Vergrößerung des Ausschnitts D, gezeigt.

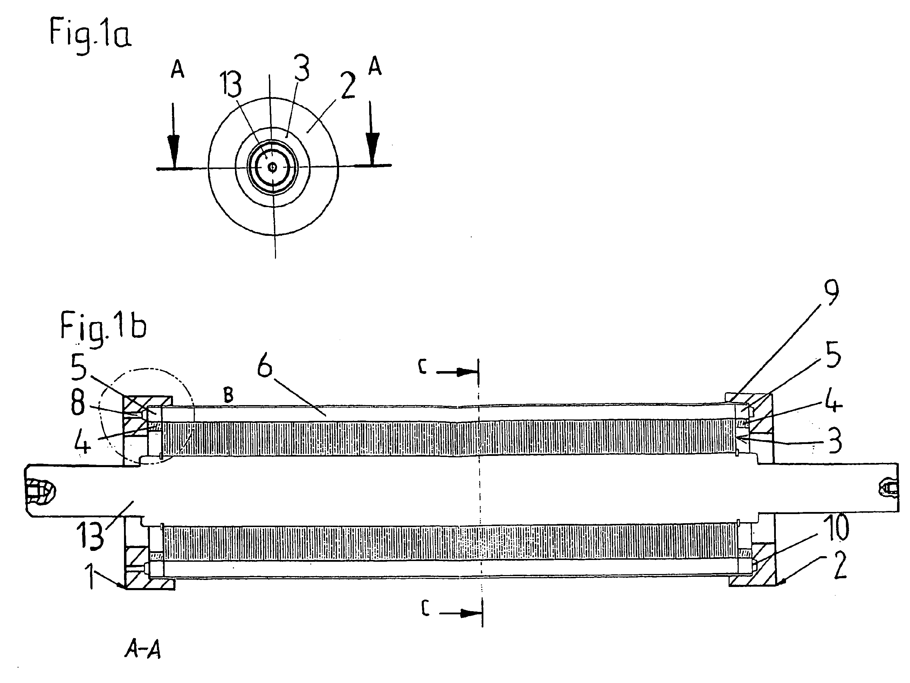

Die Figuren 1a bis 1e zeigen in verschiedenen Darstellungen eine Vorrichtung zur Durchführung des erfindungsgemäßen Verfahrens.

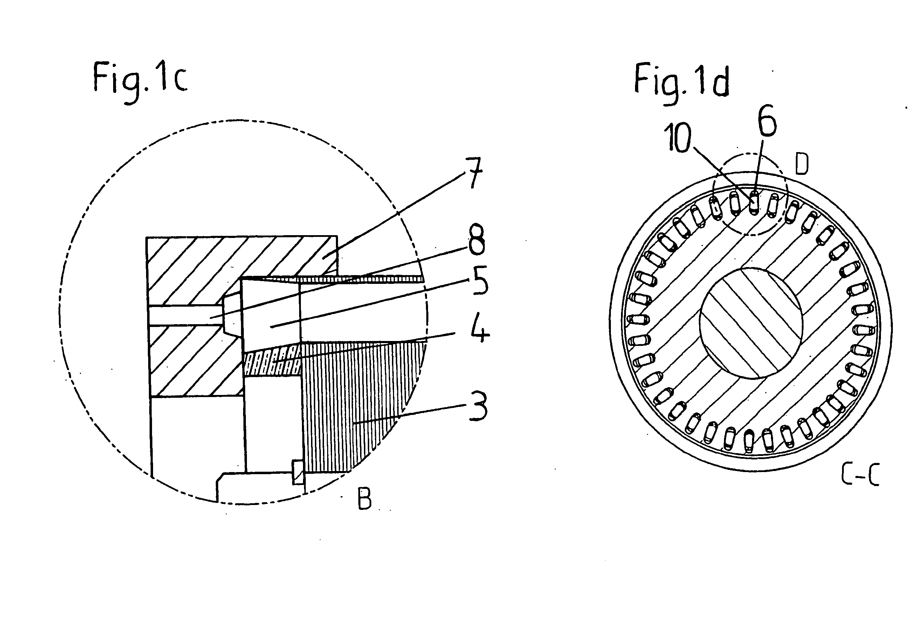

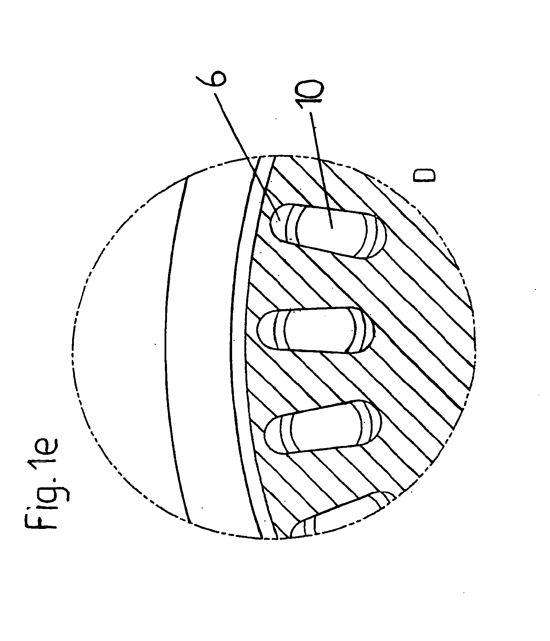

Fig. 1 a zeigt eine Draufsicht auf ein mit einem Gegenhalter 2 versehenes paketiertes Rotorpaket 3, das auf einer Welle 13 platziert ist. Ist. Das Rotorpaket 3 kann auch auf einem Dorn platziert werden. Darin eingezeichnet ist ein Schnitt A-A, dessen Schnittdarstellung in Fig. 1b wiedergegeben ist.

In Fig. 1 b, einem Längsschnitt gemäß der Linien A-A. von Fig. 1a, ist erkennbar, dass das Rotorpaket 3 zwischen einer - hier nur zum Teil dargestellten - Druckgussvorrichtung 1 und deren Gegenhalter 2 positioniert ist. Das Rotorpaket 3 wird zusammen mit Kurzschlussringen 4 fertig paketiert bereitgestellt. Die Kurzschlussringe 4 sind mit Öffnungen 5 versehen. Diese sind gleichmäßig über einen mittleren Umfang der Kurzschlussringe 4 verteilt angeordnet und korrespondieren mit Hohlräumen 6 im Rotorpaket 3. Das Rotorpaket 3 ist in Längsrichtung mit Hohlräumen 6 durchzogen. Bei dem Rotorpaket 3 sind die Hohlräume 6 radial nach außen geschlossen. Dies wird insbesondere in der Vergrößerung gemäß Fig. 1e deutlich. Die Öffnungen 5 der Kurzschlussringe 4 haben den gleichen geometrischen Querschnitt wie die Hohlräume 6 des Rotorpakets 3. Gemeinsam bilden sie Kanäle. Diese Kanäle bilden eine Gussform für die Herstellung der Kurzschlussstäbe.

In Fig. 1c erkennt man, dass die Druckgussvorrichtung 1 einen Vorsprung 7 aufweist, der als Hohlzylinder ausgebildet ist. Der Vorsprung 7 umschließt ringförmig einen Kurzschlussring 4 und ein Endteil des Rotorpakets 3. Der Außendurchmesser des Kurzschlussrings 4 und des Rotorpakets 3 sind auf den Innendurchmesser des Vorsprungs 7 so abgestimmt, dass die für das Verfahren zulässige Toleranz eingehalten wird. In der Druckgussvorrichtung 1 ist ein Durchlass 8 für die Schmelze vorhanden. Der Durchlass 8 erweitert sich an dem Übergang zur Öffnung 5 des Kurzschlussrings 4. In Fig. 1c erkennt man, dass die Öffnungen 5 der Kurzschlussringe 4 zu der dem Rotorpaket 3 abgewandten Seite konisch erweitert ausgeführt sind. Dadurch bildet die in den Öffnungen 5 der Kurzschlussringe 4 erstarrte Schmelze einen keilförmigen Pfropf, der einem Lösen der Verbindung zwischen Stab und Ring 4 entgegenwirkt.

Der in Fig. 1b gezeigte Gegenhalter 2 weist ebenfalls einen Vorsprung 9 auf, der als Hohlzylinder ausgebildet ist und einen Kurzschlussring 4 und ein Teil des Rotorpakets 3 umschließt. Der Gegenhalter 2 besitzt zudem eine oder mehrere Kavitäten 10, deren Durchmesser sich zum Kurzschlussring 4 erweitert. Die Erweiterungen des Durchlasses 8 und der Kavität erleichtern die Abnahme von Vorrichtung und Gegenhalter vom Rotorpaket nach dem Erstarren der Schmelze. Die Kavität 10 schließt sich an die Öffnung 5 des Kurzschlussrings 4 an und dient zur Aufnahme oder Speicherung von Schlacke oder Zunder.

Bei dem erfindungsgemäßen Verfahren wird die Druckgussvorrichtung 1 auf das eine Rotorende über eine Öffnung 5 eines Kurzschlussrings 4 platziert. Das gegenüberliegende Rotorende wird mit dem Gegenhalter 2 verschlossen. Anschließend wird Kupferschmelze in einen Kanal oder mehrere Kanäle gedrückt. Dies ist abhängig von der Baugröße. Auf diese Weise werden die Kanäle nacheinander gefüllt.

Damit die so hergestellten Rotorstäbe besser mit den Kupfer-Kurzschlussringen 4 verschmelzen liegt die Schmelztemperatur der Legierung des Kurzschlussrings 4 unterhalb der Schmelztemperatur des Kupferstabes. Im Ausführungsbeispiel wird eine Kupfer-Silber-Legierung als Werkstoff für die Kurzschlussringe 4 gewählt.

Fig. 1d zeigt einen Schnitt durch das Rotorpaket gemäß einem Schnitt C-C, eingezeichnet in Fig. 1b der Vorrichtung. Erkennbar sind die geschlossenen Hohlräume 6 mit einer ovalförmigen Querschnitts-Ausbildung zur Formung oder Aufnahme der Kurzschlussstäbe. Weiter teilweise erkennbar ist die Draufsicht auf die hier kreisförmigen Kavitäten 10.

In Fig. 1e, einer Ausschnittsvergrößerung D von der Querschnittszeichnung nach Fig. 1d, ist deutlicher erkennbar, dass die Hohlräume 6 des Rotorpakets 3 und die Öffnungen 5 der Kurzschlussringe 4 radial nach außen geschlossen sind.

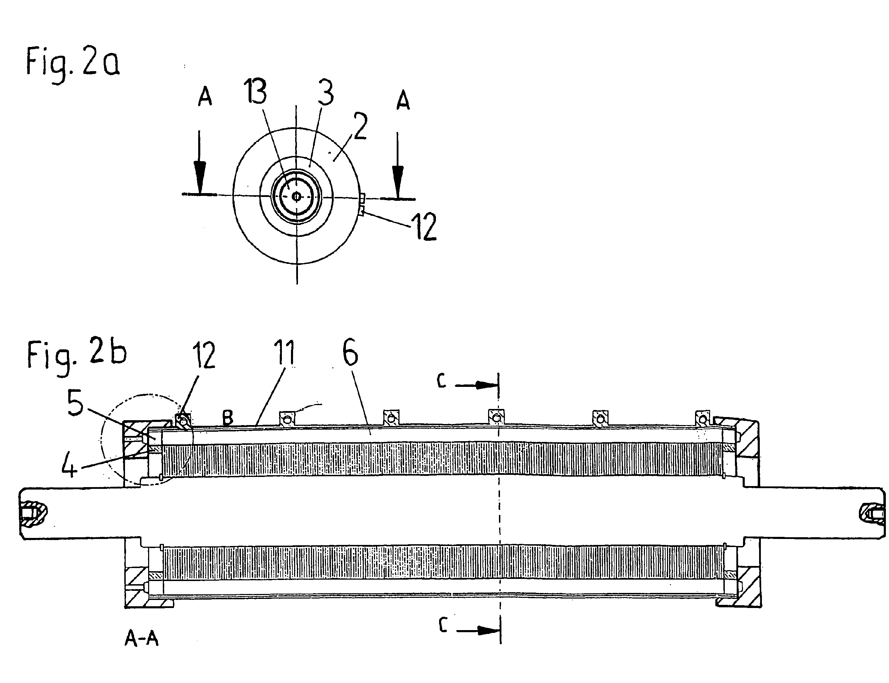

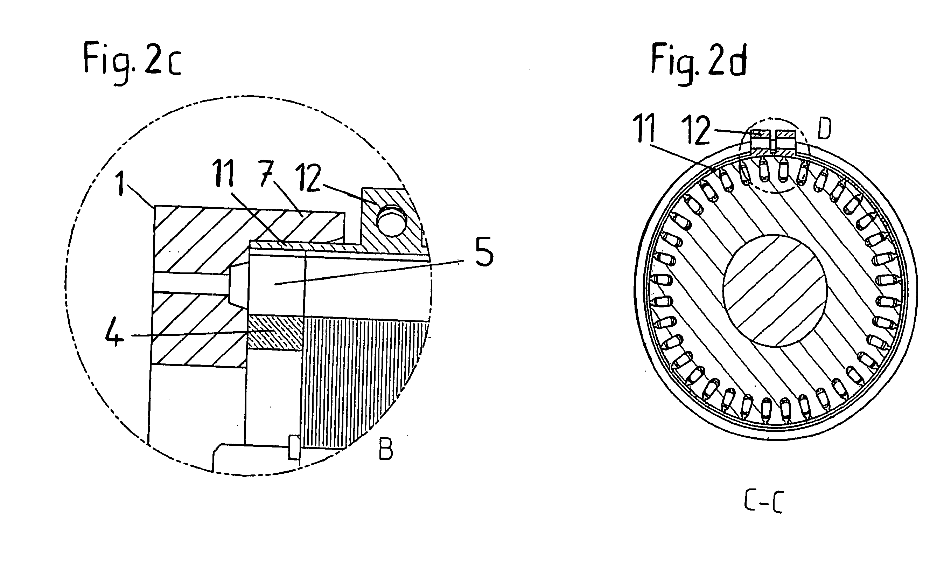

Die Fig. 2a bis 2e zeigen entsprechende Darstellungen einer anderen Vorrichtung zur Herstellung eines Kurzschlussläufers. Im Unterschied zur Darstellung der Fig. 1a bis 1e ist in Fig. 2b und Fig. 2c erkennbar, dass die Hohlräume 6 des Rotorpakets 3 und die Öffnungen 5 der Kurzschlussringe 4 radial nach außen offen ausgebildet sind. Beim Herstellungsvorgang der Kurzschlussstäbe ist bei der hier gezeigten Ausführungsform der gesamte Rotor von einem verschließenden Begrenzungselement 11 in Form eines geschlitzten Rohres umgeben. Das geschlitzte Rohr 11 hüllt das Rotorpaket 3 vollständig ein. Anstelle der hier integrierten Spannvorrichtungen 12 können auch externe - hier nicht dargestellte - Spannvorrichtungen das ein oder mehrteilige Begrenzungselement 11 dicht an das Rotorpaket 3 und dessen offenen Hohlräume 6 pressen. Dadurch wird verhindert, dass Guss oder Schmelze aus den Hohlräumen 6 austreten kann.

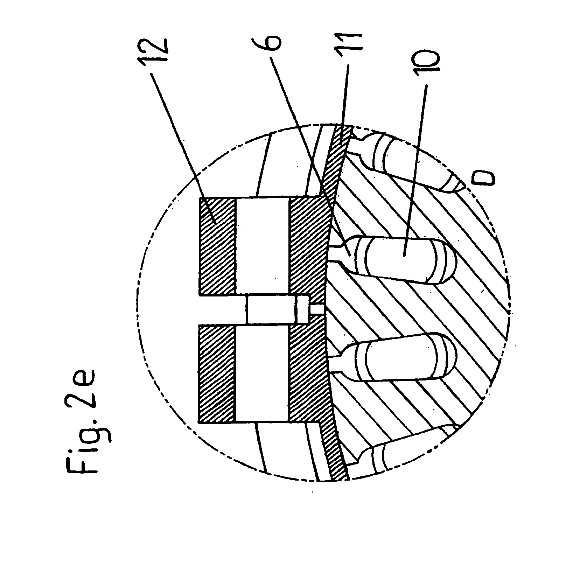

Die Spannvorrichtungen 12 können, wie in Fig. 2d und Fig. 2e gezeigt, an denjenigen Seiten des Begrenzungselements 11 angeordnet sein, die die Spaltweite des Längsschlitzes bestimmen. Mit Hilfe der gleichmäßig verteilten Spannvorrichtungen 12 wird das Begrenzungselement 11 dichtend angepresst, wobei der Längsschlitz immer zwischen zwei Hohlräumen 6 des Rotorpaketes verläuft.

Bei dieser Ausführungsform der Druckgussvorrichtung 1 ist der Vorsprung 7 und dessen Innenradius um das Maß der Wandstärke vom Begrenzungselement 11 größer ausgeführt. Somit hält das Begrenzungselement 11 auch den Kurzschlussring 4.

## Patentansprüche

1. Verfahren zur Herstellung eines Kurzschlussläufers für Asynchronmaschinen, wobei der Kurzschlussläufer ein Rotorpaket (3), Kurzschlussringe (4) und Kurzschlussstäbe umfasst, wobei das Rotorpaket (3) mit den Kurzschlussringen (4) paketiert wird und das Rotorpaket (3) mit Hohlräumen (6) versehen ist, **dadurch gekennzeichnet, dass** die Kurzschlussringe (4) Öffnungen (5) aufweisen, die mit den Hohlräumen (6) des Rotorpakets (3) Kanäle bilden, wobei eine Druckgussvorrichtung (1) auf das eine Rotorende platziert wird und die Kanäle durch einen Durchlass (8) in der Druckgussvorrichtung (1) mit Schmelze gefüllt werden, wobei die mit erstarrter Schmelze gefüllten Kanäle die Kurzschlussstäbe des Kurzschlussläufers bilden, wobei die Kurzschlussringe (4) aus einem Werkstoff bestehen, der eine niedrigere Schmelztemperatur aufweist als die Schmelze, die in die Kanäle gepresst wird.

2. Verfahren nach Anspruch 1, **dadurch gekennzeichnet, dass** ein Gegenhalter (2) auf das andere Rotorende platziert wird.

3. Verfahren nach Anspruch 1, **dadurch gekennzeichnet, dass** eine zweite Druckgussvorrichtung auf das andere Rotorende platziert wird.

4. Verfahren nach einem der Ansprüche 1 bis 3, **dadurch gekennzeichnet, dass** die Kanäle mit Kupferschmelze gefüllt werden.

5. Verfahren nach einem der Ansprüche 1 bis 4, **dadurch gekennzeichnet, dass** die Kurzschlussringe (4) aus einer Kupfer-Silber-Legierung bestehen

6. Verfahren nach einem der Ansprüche 1 bis 5, **dadurch gekennzeichnet, dass** die Öffnungen (5) der Kurzschlussringe (4) zu ihrer dem Rotorpaket (3) abgewandten Seite erweitert ausgeführt sind.

7. Verfahren nach Anspruch 6, **dadurch gekennzeichnet, dass** die Öffnungen (5) der Kurzschlussringe (4) zu ihrer dem Rotorpaket (3) abgewandten Seite konisch erweitert ausgeführt sind.

8. Verfahren nach Anspruch 2, **dadurch gekennzeichnet, dass** der Gegenhalter (2) eine Kavität (10) aufweist, die sich an eine Öffnung (5) des Kurzschlussrings (4) anschließt.

9. Verfahren nach einem der Ansprüche 1 bis 8, **dadurch gekennzeichnet, dass** die Öffnungen (5) der Kurzschlussringe (4) und/oder die Hohlräume (6) des Rotorpakets (3) radial offen sind und der Rotor von einem ein- oder mehrteiligen Begrenzungselement (11) umgeben wird, wobei das Begrenzungselement (11) über mindestens eine Spannvorrichtung (12) verfügt.

10. Verfahren nach einem der Ansprüche 1 bis 9, **dadurch gekennzeichnet, dass** der zu füllende Kanal vor dem Gießprozess evakuiert wird.

11. Verfahren nach einem der Ansprüche 1 bis 10, **dadurch gekennzeichnet, dass** der Rotor vor dem Gießprozess erwärmt wird.

12. Kurzschlussläufer für Asynchronmaschinen, wobei der Kurzschlussläufer ein Rotorpaket (3), Kurzschlussringe (4) und Kurzschlussstäbe umfasst, wobei das Rotorpaket (3) mit Hohlräumen (6) versehen ist, **dadurch gekennzeichnet, dass** die Kurzschlussringe (4) Öffnungen (5) aufweisen, die mit den Hohlräumen (6) des Rotorpakets (3) Kanäle bilden, wobei die mit erstarrter Schmelze gefüllten Kanäle die Kurzschlussstäbe des Kurzschlussläufers bilden und die Kurzschlussringe (4) im Bereich um die Öffnungen (5) mit den eingegossenen Kurzschlussstäben verschmolzen sind, wobei die Kurzschlussringe (4) aus einem Werkstoff bestehen, der eine niedrigere Schmelztemperatur aufweist als die Kurzschlussstäbe.

13. Kurzschlussläufer nach Anspruch 11 oder 12, **dadurch gekennzeichnet, dass** die Kurzschlussstäbe aus Kupfer bestehen.

14. Kurzschlussläufer nach Anspruch 11, 12 oder 13, **dadurch gekennzeichnet, dass** die Kurzschlussringe (4) aus einer Kupfer-Silber-Legierung bestehen.

15. Kurzschlussläufer nach einem der Ansprüche 11 bis 14, **dadurch gekennzeichnet, dass** die eingegossenen Kurzschlussstäbe in den Öffnungen der Kurzschlussringe (4) zu der dem Rotorpaket (3) abgewandten Seite erweitert ausgeführt sind.

16. Kurzschlussläufer nach Anspruch 15, **dadurch gekennzeichnet, dass** die eingegossenen Kurzschlussstäbe in den Öffnungen der Kurzschlussringe (4) zu der dem Rotorpaket (3) abgewandten Seite konisch erweitert ausgeführt sind.

## Claims

1. Method for producing a short-circuit rotor for asynchronous machines, the short-circuit rotor comprising a rotor core (3), short-circuit rings (4) and short-circuit bars, the rotor core (3) being assembled together with the short-circuit rings (4) and the rotor core (3) being provided with hollow spaces (6), **characterized in that** the short-circuit rings (4) have openings (5) which together with the hollow spaces (6) of the rotor core (3) form channels, a die-casting device (1) being placed onto one end of the rotor and the channels being filled with molten material through a passage (8) in the die-casting device (1), the channels filled with solidified molten material forming the short-circuit bars of the short-circuit rotor, the short-circuit rings (4) consisting of a material that has a lower melting point than the molten material that is forced into the channels.

2. Method according to Claim 1, **characterized in that** a retainer (2) is placed onto the other end of the rotor.

3. Method according to Claim 1, **characterized in that** a second die-casting device is placed onto the other end of the rotor.

4. Method according to one of Claims 1 to 3, **characterized in that** the channels are filled with molten copper.

5. Method according to one of Claims 1 to 4, **characterized in that** the short-circuit rings (4) consist of a copper-silver alloy.

6. Method according to one of Claims 1 to 5, **characterized in that** the openings (5) of the short-circuit rings (4) are made such that they widen toward the side thereof facing away from the rotor core (3).

7. Method according to Claim 6, **characterized in that** the openings (5) of the short-circuit rings (4) are made such that they widen conically toward the side thereof facing away from the rotor core (3).

8. Method according to Claim 2, **characterized in that** the retainer (2) has a hollow space (10), which adjoins an opening (5) of the short-circuit ring (4).

9. Method according to one of Claims 1 to 8, **characterized in that** the openings (5) of the short-circuit rings (4) and/or the hollow spaces (6) of the rotor core (3) are radially open and the rotor is surrounded by a one-part or multi-part delimiting element (11), the delimiting element (11) having at least one clamping device (12).

10. Method according to one of Claims 1 to 9, **characterized in that** the channel to be filled is evacuated before the casting process.

11. Method according to one of Claims 1 to 10, **characterized in that** the rotor is heated before the casting process.

12. Short-circuit rotor for asynchronous machines, the short-circuit rotor comprising a rotor core (3), short-circuit rings (4) and short-circuit bars, the rotor core (3) being provided with hollow spaces (6), **characterized in that** the short-circuit rings (4) have openings (5) which together with the hollow spaces (6) of the rotor core (3) form channels, the channels filled with solidified molten material forming the short-circuit bars of the short-circuit rotor and the short-circuit rings (4) being fused with the cast-in short-circuit bars in the region around the openings (5), the short-circuit rings (4) consisting of a material that has a lower melting point than the short-circuit bars.

13. Short-circuit rotor according to Claim 11 or 12, **characterized in that** the short-circuit bars consist of copper.

14. Short-circuit rotor according to Claim 11, 12 or 13, **characterized in that** the short-circuit rings (4) consist of a copper-silver alloy.

15. Short-circuit rotor according to one of Claims 11 to 14, **characterized in that** the cast-in short-circuit bars in the openings of the short-circuit rings (4) are made such that they widen toward the side facing away from the rotor core (3).

16. Short-circuit rotor according to Claim 15, **characterized in that** the cast-in short-circuit bars in the openings of the short-circuit rings (4) are made such that they widen conically toward the side facing away from the rotor core (3).

## Revendications

1. Procédé de fabrication d'un rotor en court-circuit pour des machines asynchrones, dans lequel le rotor en court-circuit comprend un paquet de rotor (3), des bagues de court-circuit (4) et des tiges de court-circuit, le paquet de rotor (3) étant empaqueté avec les bagues de court-circuit (4) et le paquet de rotor (3) étant pourvu d'espaces creux (6), **caractérisé en ce que** les bagues de court-circuit (4) présentent des ouvertures (5) qui forment des canaux avec les espaces creux (6) du paquet de rotor (3), un dispositif de coulée sous pression (1) étant placé sur une extrémité du rotor et les canaux étant remplis de matière en fusion à travers un passage (8) dans le dispositif de coulée sous pression (1), les canaux remplis de matière en fusion rigidifiée formant les tiges de court-circuit du rotor en court-circuit, les bagues de court-circuit (4) étant constituées d'un matériau qui présente une température de fusion inférieure à celle de la matière en fusion qui est pressée dans les canaux.

2. Procédé selon la revendication 1, **caractérisé en ce qu'**un dispositif de fixation conjugué (2) est placé sur l'autre extrémité du rotor.

3. Procédé selon la revendication 1, **caractérisé en ce qu'**un deuxième dispositif de coulée sous pression est placé sur l'autre extrémité du rotor.

4. Procédé selon l'une quelconque des revendications 1 à 3, **caractérisé en ce que** les canaux sont remplis de cuivre en fusion.

5. Procédé selon l'une quelconque des revendications 1 à 4, **caractérisé en ce que** les bagues de court-circuit (4) se composent d'un alliage de cuivre et d'argent.

6. Procédé selon l'une quelconque des revendications 1 à 5, **caractérisé en ce que** les ouvertures (5) des bagues de court-circuit (4) sont réalisées de manière élargie vers leur côté opposé au paquet de rotor (3).

7. Procédé selon la revendication 6, **caractérisé en ce que** les ouvertures (5) des bagues de court-circuit (4) sont réalisées sous forme élargie coniquement vers leur côté opposé au paquet de rotor (3).

8. Procédé selon la revendication 2, **caractérisé en ce que** le dispositif de fixation conjugué (2) présente une cavité (10) qui se raccorde à une ouverture (5) de la bague de court-circuit (4).

9. Procédé selon l'une quelconque des revendications 1 à 8, **caractérisé en ce que** les ouvertures (5) des bagues de court-circuit (4) et/ou les espaces creux (6) du paquet de rotor (3) sont ouverts radialement et le rotor est entouré par un élément de limitation (11) en une ou plusieurs parties, l'élément de limitation (11) disposant d'au moins un dispositif de serrage (12).

10. Procédé selon l'une quelconque des revendications 1 à 9, **caractérisé en ce que** le canal à remplir est mis sous vide avant le processus de coulée.

11. Procédé selon l'une quelconque des revendications 1 à 10, **caractérisé en ce que** le rotor est chauffé avant le processus de coulée.

12. Rotor en court-circuit pour machines asynchrones, dans lequel le rotor en court-circuit comprend un paquet de rotor (3), des bagues de court-circuit (4) et des tiges de court-circuit, le paquet de rotor (3) étant pourvu d'espaces creux (6), **caractérisé en ce que** les bagues de court-circuit (4) présentent des ouvertures (5) qui forment des canaux avec les espaces creux (6) du paquet de rotor (3), les canaux remplis de matière en fusion rigidifiée formant les tiges de court-circuit du rotor en court-circuit et les bagues de court-circuit (4) étant fusionnées dans la région autour des ouvertures (5) avec les tiges de court-circuit coulées, les bagues de court-circuit (4) étant constituées d'un matériau qui présente une température de fusion inférieure à celle des tiges de court-circuit.

13. Rotor en court-circuit selon la revendication 11 ou 12, **caractérisé en ce que** les tiges en court-circuit se composent de cuivre.

14. Rotor en court-circuit selon la revendication 11, 12 ou 13, **caractérisé en ce que** les bagues de court-circuit (4) se composent d'un alliage de cuivre et d'argent.

15. Rotor en court-circuit selon l'une quelconque des revendications 11 à 14, **caractérisé en ce que** les tiges de court-circuit coulées sont réalisées dans les ouvertures des bagues de court-circuit (4) de manière élargie vers le côté opposé au paquet de rotor (3).

16. Rotor en court-circuit selon la revendication 15, **caractérisé en ce que** les tiges de court-circuit coulées sont réalisées sous forme élargie coniquement dans les ouvertures des bagues de court-circuit (4) vers le côté opposé au paquet de rotor (3).
